# FASCICULE DE BREVET EUROPEEN

(11) **EP 3 373 784 B1**
(45) Date de publication et mention de la délivrance du brevet: **04.12.2019**
(21) Numéro de dépôt: 16806271.9
(22) Date de dépôt: 10.11.2016
(51) Int. Cl.: A47J 37/12, A47J 37/06, A47J 37/04, A47J 36/16

(54) **PROCÉDÉ DE CUISSON POUR APPAREIL ÉLECTRIQUE DE CUISSON AVEC MOYEN DE REMUAGE**
KOCHVERFAHREN FÜR ELEKTRISCHES KOCHGERÄT MIT RÜHRVORRICHTUNG
COOKING METHOD FOR ELECTRICAL COOKING APPARATUS WITH STIRRING MEANS

(30) Priorité: 12.11.2015 FR 1560831
(43) Date de publication de la demande: 19.09.2018
(73) Titulaire: SEB S.A., 69130 Ecully (FR)
(72) Inventeur: DELRUE, Olivier, 21260 Selongey (FR); LETAIN, François, 21120 Marcilly-sur-Tille (FR); PETIT, Michel, 21000 Dijon (FR)
(74) Mandataire: Soares, Luis Filipe
(86) Numéro de dépôt international: PCT/FR2016/052922
(87) Numéro de publication internationale: WO 2017/081419

(56) Documents cités:
- WO-A1-2007/088279
- WO-A2-2006/000699

## Description

La présente invention concerne le domaine technique des procédés de cuisson pour appareils électriques de cuisson comportant un moyen de remuage agencé dans un moyen de réception d'aliments.

La présente invention concerne notamment, mais non exclusivement, un procédé de cuisson pour les appareils électriques prévus pour le brassage et la cuisson d'aliments avec de la matière grasse et comportant un moyen de remuage disposé dans un moyen de réception (autrement appelé cuve) agencé dans un boîtier logeant un dispositif de chauffage à air chaud, dans lesquels le moyen de remuage et la cuve sont conçus pour être mis en mouvement l'un part rapport à l'autre, de manière à brasser et remuer les aliments et la matière grasse au sein de la cuve et notamment des aliments en morceaux, tels que des frites, des morceaux de poulet etc... Le document WO 2006/000699 divulgue de tels appareils de cuisson.

Le document WO 2007/088279 divulgue un appareil de cuisson du type précité comportant une pale de remuage entraînée en rotation dans un moyen de réception d'aliments (autrement appelé cuve). La géométrie de la pale de remuage et le mouvement de la pale de remuage dans la cuve contribuent à réorienter les aliments, notamment des frites, les uns par rapport aux autres. Les différentes faces des frites peuvent ainsi entrer successivement en contact avec le fond de la cuve susceptible de recueillir de la matière grasse, les frites disposées sur le dessus de la cuve étant davantage exposées au flux d'air chaud. Ces dispositions permettent d'obtenir une meilleure homogénéité de cuisson. Un inconvénient de la construction précitée réside toutefois dans le fait que le système de brassage ne permet pas de cuire tous les types d'aliments introduits dans la cuve tels que des aliments dits « mous ». En effet ce brassage sollicite mécaniquement l'aliment mou qui ne peut supporter les efforts appliqués du fait de sa tenue en début de cuisson. Par exemple on peut citer de manière non limitative les beignets comme type d'aliments mous.

On connait aussi un procédé de cuisson, avec un appareil tel que précité, qui permet de cuire des aliments recouverts de panure. Ce procédé comprend plusieurs étapes dont une étape initiale dans laquelle il n'y a pas de brassage des aliments c'est-à-dire dans laquelle le moyen de remuage est désactivé. Cependant ce procédé n'est pas adapté à la cuisson des aliments « mous » car le brassage qui s'opère dans les étapes ultérieures a pour effet de déformer les aliments comme les beignets ce qui les rend de ce fait moins attrayants pour le consommateur. De plus dans ce procédé, la croute des aliments mous est épaisse et ils ne sont pas suffisamment montés.

Le but de l'invention est donc de permettre de cuire des aliments « mous », tels que des beignets, avec moins de matière grasse, tout en conservant leur géométrie et en leur permettant de lever.

Un objet de la présente invention concerne un procédé de cuisson pour un appareil de cuisson d'aliments comprenant un moyen de réception prévu pour recevoir les aliments, un moyen de remuage disposé au sein du moyen de réception, au moins un moyen de chauffe principal et au moins un moteur de ventilation pour générer un flux chauffant, le moyen de réception et le moyen de remuage étant conçus pour être animés d'un mouvement relatif de rotation, l'appareil de cuisson comprenant au moins un moyen de contrôle du mouvement relatif de rotation, du moyen de chauffe principal et du moteur de ventilation caractérisé en ce que le procédé de cuisson comprend :
- une première étape de cuisson d'une première durée, durant laquelle le mouvement relatif de rotation du moyen de réception et du moyen de remuage est neutralisé, le moyen de chauffe principal est commandé pour réguler la température selon une première valeur de consigne et le moteur de ventilation est commandé à un premier régime de ventilation pour réguler le flux chauffant selon une première vitesse de circulation ;
- une deuxième étape de cuisson d'une deuxième durée supérieure à la première durée, durant laquelle le mouvement relatif de rotation du moyen de réception et du moyen de remuage est actif selon une première vitesse de rotation, le moyen de chauffe principal est commandé pour réguler la température selon une deuxième valeur de consigne, inférieure ou égale à la première valeur de consigne, et le moteur de ventilation est commandé à un deuxième régime de ventilation, inférieur au premier régime de ventilation, pour réguler le flux chauffant selon une deuxième vitesse de circulation.

De cette manière le procédé de cuisson en deux étapes spécifiques permet de réussir la cuisson des aliments mous. En effet la cuisson à haute température de la première étape, couplée à l'absence de brassage, permet de forcer la pousse de l'aliment mou par la levure lorsque celui-ci en contient. L'effet de la seconde étape sur les aliments mous est que la cuisson à température basse permet de cuire l'intérieur sans sur cuire l'extérieur et permet de ne pas sécher la surface des aliments mous lors de cette même seconde étape.

Selon un mode de réalisation, la durée de cuisson cumulée des deux étapes de cuisson correspond à la durée de cuisson sélectionnée par un utilisateur.

De cette manière il suffit d'indiquer une durée globale de cuisson et le procédé de cuisson adapte automatiquement cette durée globale aux deux durées spécifiques de cuisson nécessaires aux deux étapes de cuisson.

Selon un mode de réalisation, la durée de la première étape de cuisson est identique quelle que soit la durée cumulée des deux étapes de cuisson et est comprise entre 3 et 6 minutes et est préférentiellement égale à 4 minutes.

La durée de la première étape de cuisson est fixée préférentiellement à 4 minutes car sur des aliments mous comme des beignets simples ou doubles (ie des beignets fourrés), cette durée est celle qui donne la bonne pousse sans épaissir la croûte externe de l'aliment mou. Elle est indépendante de la quantité d'aliment mou introduit.

La seconde durée est adaptée à la quantité d'aliment mou introduite. A titre d'exemple quatre beignets simples sont cuits en 15 minutes et quatre beignets doubles sont cuits en 20 minutes. Dans les deux cas, la durée de la première étape de cuisson, indépendante de la quantité d'aliment mou introduit, est préférentiellement égale à 4 minutes.

Selon un mode de réalisation, la première valeur de consigne de la température est comprise entre 120 et 140°C. Cette température permet de faire « gonfler » ou « pousser » les aliments mous.

Selon un mode de réalisation, la deuxième valeur de consigne de la température est comprise entre 110 et 120°C.

De cette manière il est possible de faire cuire l'intérieur des aliments mous sans sur cuire l'extérieur de ceux-ci.

Selon un mode de réalisation, le premier régime de ventilation est sensiblement égal à 100% du régime nominal du moteur de ventilation. De cette manière, la vitesse du flux chauffant est adaptée à faire gonfler les aliments mous.

Selon un mode de réalisation, le deuxième régime de ventilation est compris entre 50 et 90% du régime nominal du moteur de ventilation et est situé préférentiellement entre 70 et 80% du régime nominal du moteur de ventilation. De cette manière la vitesse du flux chauffant est adaptée à cuire l'intérieur des aliments mous.

Un autre objet de la présente invention concerne un appareil de cuisson d'aliments comprenant un moyen de réception prévu pour recevoir les aliments, un moyen de remuage disposé au sein du moyen de réception, au moins un moyen de chauffe principal et au moins un moteur de ventilation pour générer un flux chauffant, le moyen de réception et le moyen de remuage étant conçus pour être animés d'un mouvement relatif de rotation, l'appareil comprenant au moins un moyen de contrôle du mouvement relatif de rotation, du moyen de chauffe principal et du moteur de ventilation caractérisé en ce que le moyen de contrôle est équipé d'une unité de contrôle électronique comprenant un programme de cuisson comprenant :
- une première étape de cuisson d'une première durée, durant laquelle le mouvement relatif de rotation du moyen de réception et du moyen de remuage est neutralisé, le moyen de chauffe principal est commandé pour réguler la température selon une première valeur de consigne et le moteur de ventilation est commandé à un premier régime de ventilation pour réguler le flux chauffant selon une première vitesse de circulation ;
- une deuxième étape de cuisson d'une deuxième durée supérieure à la première durée, durant laquelle le mouvement relatif de rotation du moyen de réception et du moyen de remuage est actif selon une première vitesse de rotation, le moyen de chauffe principal est commandé pour réguler la température selon une deuxième valeur de consigne, inférieure ou égale à la première valeur de consigne, et le moteur de ventilation est commandé à un deuxième régime de ventilation inférieur au premier régime de ventilation pour réguler le flux chauffant selon une deuxième vitesse de circulation.

Un tel appareil permet de faire cuire des aliments mous pour que ceux-ci gardent leur forme de départ, soient gonflés, aient une croute fine et aient une coloration.

Selon un mode de réalisation, le moyen de réception comprend un plateau prévu pour recevoir les aliments et positionné au dessus dudit moyen de réception et du moyen de remuage et le plateau et le moyen de réception étant conçus pour être animés d'un mouvement relatif de rotation.

De cette manière les aliments mous ne sont pas soumis au moyen de remuage ce qui permet de mieux conserver leur géométrie.

L'invention sera mieux comprise à l'aide des exemples de réalisation pris à titre nullement limitatif, illustrés dans les figures annexées, dans lesquelles :
- la figure 1 est une vue en coupe longitudinale d'un exemple de réalisation d'un appareil pour mettre en œuvre le procédé selon l'invention,
- la figure 2 est une vue en perspective en position ouverte de l'appareil représenté sur la figure 1, dans lequel le moyen de réception a été retiré,
- la figure 3 est une vue en perspective du moyen de remuage prévu pour être agencé dans le moyen de réception,
- la figure 4 est une vue en perspective du moyen de réception,
- la figure 5 est une vue en perspective en position ouverte de l'appareil représenté sur la figure 1 dans une variante de réalisation dans laquelle un plateau a été intégré au dessus du moyen de réception,
- la figure 6 est un diagramme de l'évolution de la température dans le temps pour le procédé selon l'invention.

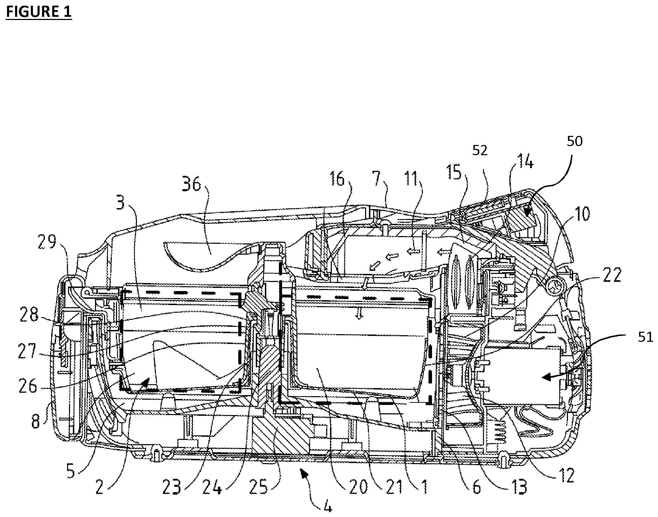

L'appareil de cuisson représenté à la figure 1 comprend un moyen de réception 1 prévu pour recevoir les aliments, un moyen de remuage 2 disposé au sein du moyen de réception 1. Le moyen de réception 1 présente une ouverture supérieure 3. Le moyen de réception 1 et le moyen de remuage 2 sont conçus pour être animés d'un mouvement relatif de rotation.

Plus particulièrement, le moyen de réception 1 est agencé dans un boîtier 4. Le boîtier 4 définit un logement 5 dans lequel est agencé le moyen de réception 1. Le boîtier 4 comporte un corps 6 surmonté d'un couvercle 7. Le couvercle 7 comporte une partie transparente ou translucide agencée au dessus du moyen de réception 1.

L'appareil de cuisson comporte un moyen de chauffe principal 10. Tel que représenté sur la figure 1, le moyen de chauffe principal 10 génère un flux chauffant 11 entrant dans le moyen de réception 1 par l'ouverture supérieure 3.

Plus particulièrement, l'appareil de cuisson comporte un ventilateur 12 prévu pour aspirer l'air présent dans le logement 5 par une admission d'air 13 et pour propulser l'air sur un élément chauffant 14 agencé dans un conduit 15 débouchant dans le logement 5. Une partie 16 du conduit 15 est ménagée dans le couvercle 7. Le ventilateur 12 est mis en mouvement par un moteur de ventilation 51.

Plus particulièrement, le moyen de réception 1 est formé par une cuve 20 comportant un fond 21 et une paroi latérale 22. Le fond 21 est incliné vers le bas en direction de la paroi latérale 22. La cuve 20 présente une ouverture centrale 23 prévue pour le passage d'un axe d'entraînement 24 entraîné en rotation par un moteur 25. Une cheminée 26 est montée sur l'ouverture centrale 23. Le moyen de remuage 2 est monté sur l'axe d'entraînement 24. Le moyen de remuage 2 présente un organe d'accrochage 27 prévu pour venir en prise avec un organe de retenue 28 ménagé dans la cheminée 26. La cuve 20 est avantageusement réalisée en matériau métallique, de préférence en matériau métallique revêtu ou en acier inoxydable. Le moyen de réception 1 comporte un support 29 fixé à la cuve 20. Le moyen de réception 1 comporte une poignée 8. La poignée 8 est par exemple montée articulée sur le support 29.

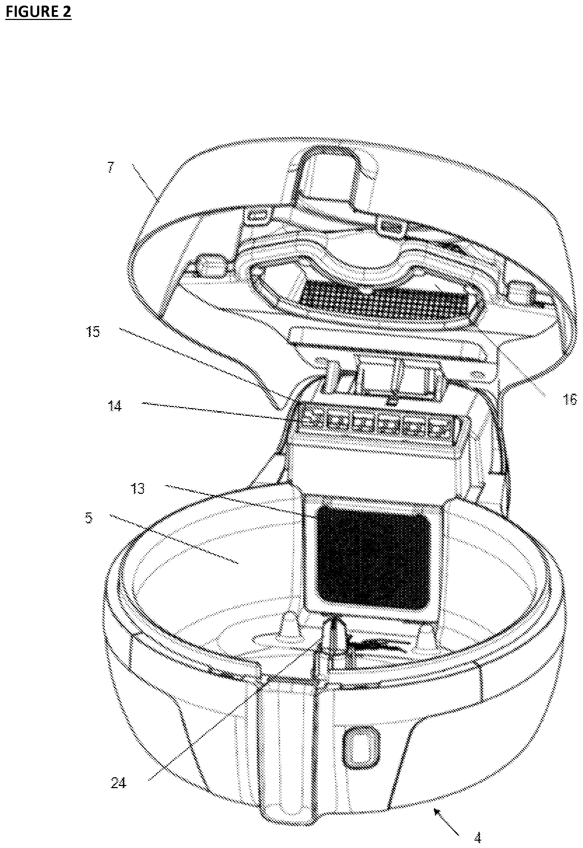

Le moyen de réception 1 est monté amovible par rapport au boîtier 4, la figure 2 illustrant le boîtier 4 avec le couvercle 7 ouvert en l'absence du moyen de réception 1.

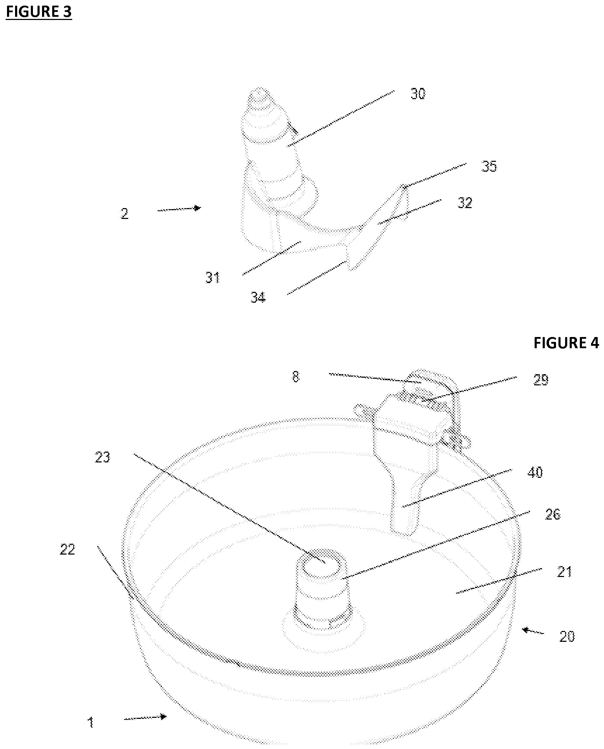

Le moyen de remuage 2 illustré sur la figure 3 comporte un moyeu 30 prévu pour coiffer la cheminée 26, et un bras 31 issu du moyeu 30. Le moyen de remuage 2 comprend un moyen de soulèvement des aliments 32 formé par une surface fuyante inclinée par rapport à l'axe du moyeu 30. La largeur de la surface fuyante diminue depuis une partie inférieure avant 34 vers une partie supérieure arrière 35. Une cuiller 36 est montée amovible sur l'extrémité supérieure du moyeu 30.

Tel que visible sur la figure 4, un obstacle latéral 40 est positionné dans le moyen de réception 1. Plus particulièrement, l'obstacle latéral 40 est issu du support 29. L'obstacle latéral 40 s'étend sur au moins une partie de la hauteur de la paroi latérale 22 de la cuve 20.

Selon l'invention, le moyen de remuage 2 est entrainé en rotation par un moteur 25 en liaison mécanique avec l'axe d'entrainement 24. Le moteur 25 est commandé par un moyen de contrôle 50. De manière générale le moyen de contrôle 50 assure l'activation ou la neutralisation du moteur 25 et donc la rotation du moyen de remuage 2. De même, le moyen de contrôle 50 assure l'alimentation du moyen de chauffe principal 10 de l'appareil et l'alimentation du moteur de ventilation 51. Notamment, le moyen de contrôle 50 est conformé pour assurer le fonctionnement de l'appareil selon au moins deux niveaux de température et selon au moins un régime de ventilation.

Selon une variante de réalisation l'appareil comprend également un plateau 60 qui est positionné dans le boîtier 4 au dessus du moyen de réception 1 et du moyen de remuage 2 disposé au sein du moyen de réception 1.

L'appareil comprend également une unité de contrôle électronique 52 dans laquelle des programmes de cuisson peuvent être enregistrés.

L'appareil comprend également de façon connue en soi une interface utilisateur permettant à celui-ci notamment de mettre en marche l'appareil, de choisir, modifier ou annuler un mode de cuisson préprogrammé dans l'unité de contrôle électronique 52.

Selon l'invention, l'unité de contrôle électronique 52 permet de mettre en œuvre un procédé particulier de cuisson permettant de préserver la qualité des aliments mous. La mise en œuvre du procédé permet notamment de cuire des aliments mous, tels que des beignets, avec moins de matière grasse, tout en conservant leur géométrie et en leur permettant de lever.

Le procédé de cuisson comprend pour cela deux étapes principales. Une première étape (E1) de cuisson, d'une première durée (T1), qui consiste à neutraliser le mouvement relatif de rotation du moyen de réception 1 et du moyen de remuage 2, à commander le moyen de chauffe principal 10 pour réguler la température selon une première valeur de consigne et commander le moteur de ventilation 51 à un premier régime de ventilation pour réguler le flux chauffant 11 selon une première vitesse de circulation.

Selon la première étape, la non rotation du moyen de remuage 2 permet de préserver la géométrie des aliments mous, qui en début de cuisson sont fragiles. La température choisie pendant cette première étape permet de commencer la cuisson des aliments et donc la solidification. A l'issue de cette première étape les aliments mous ont gagné en résistance mécanique pour supporter le remuage opéré dans la deuxième étape.

En effet, la deuxième étape du procédé consiste à activer le mouvement relatif de rotation du moyen de réception 1 et du moyen de remuage 2 selon une première vitesse de rotation, le moyen de chauffe principal 10 est commandé pour réguler la température selon une deuxième valeur de consigne, inférieure ou égale à la première valeur de consigne, et le moteur de ventilation 51 est commandé à un deuxième régime de ventilation, inférieur au premier régime de ventilation, pour réguler le flux chauffant 11 selon une deuxième vitesse de circulation. Cette deuxième étape (E2) de cuisson est d'une deuxième durée (T2) supérieure à la première durée (T1).

Selon la deuxième étape (E2), la vitesse de circulation du flux chauffant 11 est abaissée par rapport à la première étape de manière à ne pas sécher la surface des aliments mous.

Selon un mode de réalisation, la première valeur de consigne de la première étape est comprise entre 120° et 140°C et la deuxième valeur de consigne de la deuxième étape est comprise entre 110 et 120°C°.

Le choix exact de la température dépend notamment du type d'aliments mous à cuire.

Selon une autre caractéristique du procédé selon l'invention, la durée de cuisson cumulée des deux étapes de cuisson (T1, T2) correspond à la durée de cuisson sélectionnée par un utilisateur.

Pour mieux comprendre le procédé selon l'invention, le fonctionnement et l'utilisation de l'appareil est décrit en détail ci-après.

L'utilisateur met en place le moyen de réception 1 dans le logement 5 du boîtier 4, monte le moyen de remuage 2 dans le moyen de réception 1, dispose les aliments mous dans le moyen de réception 1 et ajoute si désiré de la matière grasse ou de l'huile en utilisant la cuiller 36.

Lors de la mise en marche de l'appareil, l'utilisateur sélectionne le mode de cuisson approprié et choisi le temps de cuisson par l'intermédiaire de l'interface utilisateur. Selon une autre variante, une durée prédéterminée peut-être affichée puis modifiée par l'utilisateur.

Lorsque l'utilisateur démarre le cycle de cuisson choisi de l'appareil, la première étape de procédé selon l'invention est déclenchée par l'unité de contrôle électronique 52. Ainsi, le moyen de chauffe 10 génère le flux chauffant 11 entrant dans le moyen de réception 1 par l'ouverture supérieure 3, et le moteur 25, entraînant en rotation le moyen de remuage 2 dans le moyen de réception 1, n'est pas activé. La régulation de température selon la première valeur de température est assurée par exemple par l'intermédiaire d'un capteur de type à coefficient de température négatif (CTN). Lorsque la durée de la première étape est écoulée, la deuxième étape du procédé selon l'invention débute.

Le moyen de chauffe est maintenu actif mais la température de régulation est modifiée et diminuée jusqu'à une deuxième valeur. Le moteur 25 entraînant en rotation le moyen de remuage 2 dans le moyen de réception 1 est par ailleurs activé.

Le moyen de remuage 2 contribue à déplacer les aliments les uns par rapport aux autres.

Notamment, l'obstacle latéral 40 bloque une partie des aliments disposés en périphérie et favorise l'élévation des aliments sous l'action du moyen de soulèvement des aliments 32.

L'utilisateur peut retirer le moyen de réception 1 du boîtier 4 en utilisant une poignée 8.

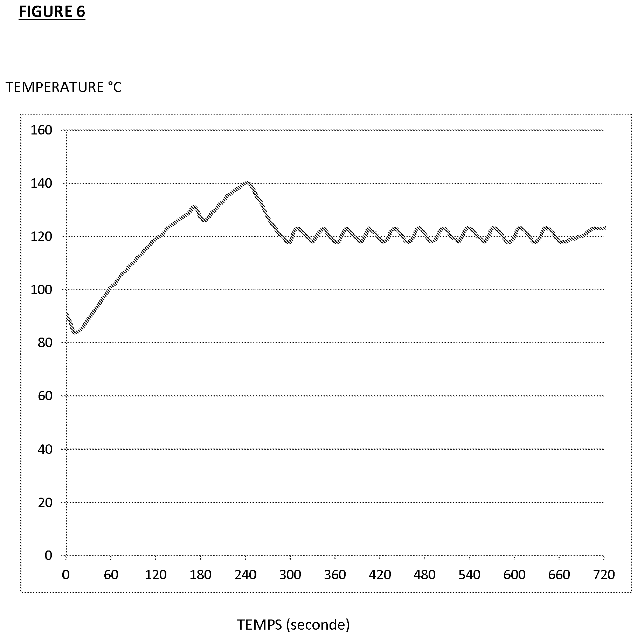

Comme visible sur la figure 6 qui représente la variation de température dans l'appareil en fonction du temps, les deux étapes sont visibles et la chute de température intervient sensiblement à la fin de la première étape et se situe aux alentours de 4 minutes.

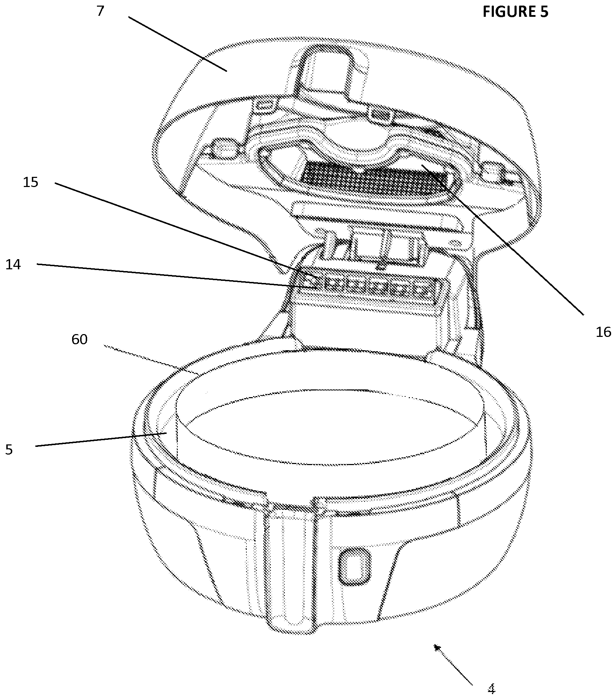

A titre de variante visible à la figure 5, un plateau 60 est positionné au dessus du moyen de remuage 2 et du moyen de réception 1 de manière à éviter que les aliments mous soient soumis au brassage du moyen de remuage 2. Le plateau 60 est néanmoins mobile par rapport au moyen de réception 1 et les deux étapes du procédé peuvent également être opérées.

A titre de variante, d'autres types de moyens de chauffe 10 peuvent être envisagés, notamment un moyen de chauffe par rayonnement générant un flux chauffant 11 rayonnant entrant dans le moyen de réception 1 par l'ouverture supérieure 3, ou encore un moyen de chauffe disposé dans ou sous le moyen de réception 1. Si désiré, le moyen de chauffe peut être solidaire du moyen de réception 1.

A titre de variante, le moyen de remuage 2 n'est pas nécessairement entraîné en rotation dans le moyen de réception 1. Notamment, le moyen de réception peut être entraîné en rotation, si désiré dans un boîtier.

A titre de variante, le moyen de réception 1 n'est pas nécessairement formé par une cuve. Le moyen de réception 1 présente de préférence un fond et une paroi latérale. Le moyen de réception peut notamment être formé par un panier ajouré.

La présente invention n'est nullement limitée à l'exemple de réalisation décrit et à ses variantes, mais englobe de nombreuses modifications dans le cadre des revendications.

## Revendications

1. Procédé de cuisson pour un appareil de cuisson d'aliments comprenant un moyen de réception (1) prévu pour recevoir les aliments, un moyen de remuage (2) disposé au sein du moyen de réception (1), au moins un moyen de chauffe principal (10) et au moins un moteur de ventilation (51) pour générer un flux chauffant (11), le moyen de réception (1) et le moyen de remuage (2) étant conçus pour être animés d'un mouvement relatif de rotation, l'appareil de cuisson comprenant au moins un moyen de contrôle (50) du mouvement relatif de rotation, du moyen de chauffe principal (10) et du moteur de ventilation (51) **caractérisé en ce que** le procédé de cuisson comprend :
- une première étape (E1) de cuisson d'une première durée (T1), durant laquelle le mouvement relatif de rotation du moyen de réception (1) et du moyen de remuage (2) est neutralisé, le moyen de chauffe principal (10) est commandé pour réguler la température selon une première valeur de consigne et le moteur de ventilation est commandé à un premier régime de ventilation pour réguler le flux chauffant (11) selon une première vitesse de circulation ;
- une deuxième étape (E2) de cuisson d'une deuxième durée (T2) supérieure à la première durée (T1), durant laquelle le mouvement relatif de rotation du moyen de réception (1) et du moyen de remuage (2) est actif selon une première vitesse de rotation, le moyen de chauffe principal (10) est commandé pour réguler la température selon une deuxième valeur de consigne, inférieure ou égale à la première valeur de consigne, et le moteur de ventilation (51) est commandé à un deuxième régime de ventilation, inférieur au premier régime de ventilation, pour réguler le flux chauffant (11) selon une deuxième vitesse de circulation.

2. Procédé de cuisson selon la revendication 1 **caractérisé en ce que** la durée de cuisson cumulée des deux étapes de cuisson (T1, T2) correspond à la durée de cuisson sélectionnée par un utilisateur.

3. Procédé de cuisson selon la revendication 2, **caractérisé en ce que** la durée (T1) de la première étape de cuisson est identique quelle que soit la durée cumulée des deux étapes de cuisson (T1, T2) et est comprise entre 3 et 6 minutes et est préférentiellement égale à 4 minutes.

4. Procédé de cuisson selon l'une des revendications précédentes, **caractérisé en ce que** la première valeur de consigne de la température est comprise entre 120 et 140°C.

5. Procédé de cuisson selon l'une des revendications précédentes, **caractérisé en ce que** la deuxième valeur de consigne de la température est comprise entre 110 et 120°C.

6. Procédé de cuisson selon l'une des revendications précédentes, **caractérisé en ce que** le premier régime de ventilation est sensiblement égal à 100% du régime nominal du moteur de ventilation (51).

7. Procédé de cuisson selon l'une des revendications précédentes, **caractérisé en ce que** le deuxième régime de ventilation est compris entre 50 et 90% du régime nominal du moteur de ventilation (51) et est situé préférentiellement entre 70 et 80% du régime nominal du moteur de ventilation (51).

8. Appareil de cuisson d'aliments comprenant un moyen de réception (1) prévu pour recevoir les aliments, un moyen de remuage (2) disposé au sein du moyen de réception (1), au moins un moyen de chauffe principal (10) et au moins un moteur de ventilation (51) pour générer un flux chauffant (11), le moyen de réception (1) et le moyen de remuage (2) étant conçus pour être animés d'un mouvement relatif de rotation, l'appareil comprenant au moins un moyen de contrôle (50) du mouvement relatif de rotation, du moyen de chauffe principal (10) et du moteur de ventilation (51) **caractérisé en ce que** le moyen de contrôle (50) est équipé d'une unité de contrôle électronique (52) comprenant un programme de cuisson comprenant :
- une première étape (E1) de cuisson d'une première durée (T1), durant laquelle le mouvement relatif de rotation du moyen de réception (1) et du moyen de remuage (2) est neutralisé, le moyen de chauffe principal (10) est commandé pour réguler la température selon une première valeur de consigne et le moteur de ventilation (51) est commandé à un premier régime de ventilation pour réguler le flux chauffant (11) selon une première vitesse de circulation ;
- une deuxième étape (E2) de cuisson d'une deuxième durée (T2) supérieure à la première durée (T1), durant laquelle le mouvement relatif de rotation du moyen de réception (1) et du moyen de remuage (2) est actif selon une première vitesse de rotation, le moyen de chauffe principal (10) est commandé pour réguler la température selon une deuxième valeur de consigne, inférieure ou égale à la première valeur de consigne, et le moteur de ventilation (51) est commandé à un deuxième régime de ventilation, inférieur au premier régime de ventilation, pour réguler le flux chauffant (11) selon une deuxième vitesse de circulation.

9. Appareil de cuisson d'aliments selon la revendication précédente, **caractérisé en ce que** le moyen de réception (1) comprend un plateau (60) prévu pour recevoir les aliments et positionné au dessus dudit moyen de réception (1) et du moyen de remuage (2) et le plateau (60) et le moyen de réception (1) sont conçus pour être animés d'un mouvement relatif de rotation.

## Patentansprüche

1. Garverfahren für eine Gareinrichtung für Nahrungsmittel, umfassend ein Aufnahmemittel (1), welches dafür vorgesehen ist, die Nahrungsmittel aufzunehmen, ein Rührmittel (2), das innerhalb des Aufnahmemittels (1) angeordnet ist, mindestens ein Hauptheizmittel (10) und mindestens einen Lüftermotor (51), um einen Heizstrom (11) zu erzeugen, wobei das Aufnahmemittel (1) und das Rührmittel (2) dafür konzipiert sind, in einer relativen Drehbewegung geführt zu werden, wobei die Gareinrichtung mindestens ein Mittel zum Steuern (50) der relativen Drehbewegung, des Hauptheizmittels (10) und des Lüftermotors (51) umfasst, **dadurch gekennzeichnet, dass** das Garverfahren umfasst:
- einen ersten Garschritt (E1) einer ersten Dauer (T1), während der die relative Drehbewegung des Aufnahmemittels (1) und des Rührmittels (2) aufgehoben ist, das Hauptheizmittel (10) gesteuert wird, um die Temperatur gemäß einem ersten Sollwert zu regeln, und der Lüftermotor mit einer ersten Lüfterdrehzahl gesteuert wird, um den Heizstrom (11) gemäß einer ersten Zirkulationsgeschwindigkeit zu regeln;
- einen zweiten Garschritt (E2) einer zweiten Dauer (T2), welche größer ist als die erste Dauer (T1), während der die relative Drehbewegung des Aufnahmemittels (1) und des Rührmittels (2) gemäß einer ersten Drehgeschwindigkeit aktiv ist, das Hauptheizmittel (10) gesteuert wird, um die Temperatur gemäß einem zweiten Sollwert zu regeln, der kleiner als oder gleich dem ersten Sollwert ist, und der Lüftermotor (51) mit einer zweiten Lüfterdrehzahl gesteuert wird, die kleiner ist als die erste Lüfterdrehzahl, um den Heizstrom (11) gemäß einer zweiten Zirkulationsgeschwindigkeit zu regeln.

2. Garverfahren nach Anspruch 1, **dadurch gekennzeichnet, dass** die kumulierte Gardauer der zwei Garschritte (T1, T2) der von einem Benutzer gewählten Gardauer entspricht.

3. Garverfahren nach Anspruch 2, **dadurch gekennzeichnet, dass** die Dauer (T1) des ersten Garschritts ungeachtet der kumulierten Dauer der zwei Garschritte (T1, T2) identisch ist und im Bereich zwischen 3 und 6 Minuten liegt, und vorzugsweise gleich 4 Minuten ist.

4. Garverfahren nach einem der vorstehenden Ansprüche, **dadurch gekennzeichnet, dass** der erste Sollwert der Temperatur im Bereich zwischen 120 und 140 °C liegt.

5. Garverfahren nach einem der vorstehenden Ansprüche, **dadurch gekennzeichnet, dass** der zweite Sollwert der Temperatur im Bereich zwischen 110 und 120 °C liegt.

6. Garverfahren nach einem der vorstehenden Ansprüche, **dadurch gekennzeichnet, dass** die erste Lüfterdrehzahl im Wesentlichen gleich 100 % der Nenndrehzahl des Lüftermotors (51) ist.

7. Garverfahren nach einem der vorstehenden Ansprüche, **dadurch gekennzeichnet, dass** die zweite Lüfterdrehzahl im Bereich zwischen 50 und 90 % der Nenndrehzahl des Lüftermotors (51) liegt, und vorzugsweise zwischen 70 und 80 % der Nenndrehzahl des Lüftermotors (51) liegt.

8. Gareinrichtung für Nahrungsmittel, umfassend ein Aufnahmemittel (1), welches dafür vorgesehen ist, die Nahrungsmittel aufzunehmen, ein Rührmittel (2), das innerhalb des Aufnahmemittels (1) angeordnet ist, mindestens ein Hauptheizmittel (10) und mindestens einen Lüftermotor (51), um einen Heizstrom (11) zu erzeugen, wobei das Aufnahmemittel (1) und das Rührmittel (2) dafür konzipiert sind, in einer relativen Drehbewegung geführt zu werden, wobei die Einrichtung mindestens ein Mittel zum Steuern (50) der relativen Drehbewegung, des Hauptheizmittels (10) und des Lüftermotors (51) umfasst, **dadurch gekennzeichnet, dass** das Steuerungsmittel (50) mit einer elektronischen Steuerungseinheit (52) ausgerüstet ist, die ein Garprogramm umfasst, umfassend:
- einen ersten Garschritt (E1) einer ersten Dauer (T1), während der die relative Drehbewegung des Aufnahmemittels (1) und des Rührmittels (2) aufgehoben ist, das Hauptheizmittel (10) gesteuert wird, um die Temperatur gemäß einem ersten Sollwert zu regeln, und der Lüftermotor (51) mit einer ersten Lüfterdrehzahl gesteuert wird, um den Heizstrom (11) gemäß einer ersten Zirkulationsgeschwindigkeit zu regeln;
- einen zweiten Garschritt (E2) einer zweiten Dauer (T2), welche größer ist als die erste Dauer (T1), während der die relative Drehbewegung des Aufnahmemittels (1) und des Rührmittels (2) gemäß einer ersten Drehgeschwindigkeit aktiv ist, das Hauptheizmittel (10) gesteuert wird, um die Temperatur gemäß einem zweiten Sollwert zu regeln, der kleiner als oder gleich dem ersten Sollwert ist, und der Lüftermotor (51) mit einer zweiten Lüfterdrehzahl gesteuert wird, die kleiner ist als die erste Lüfterdrehzahl, um den Heizstrom (11) gemäß einer zweiten Zirkulationsgeschwindigkeit zu regeln.

9. Gareinrichtung für Nahrungsmittel nach dem vorstehenden Anspruch, **dadurch gekennzeichnet, dass** das Aufnahmemittel (1) eine Schale (60) umfasst, die dafür vorgesehen ist, die Nahrungsmittel aufzunehmen, und über dem Aufnahmemittel (1) und dem Rührmittel (2) positioniert ist, und die Schale (60) und das Aufnahmemittel (1) dafür konzipiert sind, in einer relativen Drehbewegung geführt zu werden.

## Claims

1. Cooking method for an apparatus for cooking food comprising a receiving means (1) provided for receiving food, a stirring means (2) arranged within the receiving means (1), at least one main heating means (10) and at least one ventilation motor (51) for generating a heating flow (11), the receiving means (1) and the stirring means (2) being designed to be moved with a relative rotation movement, the cooking apparatus comprising at least one means for controlling (50) the relative rotation movement, the main heating means (10) and the ventilation motor (51), **characterised in that** the cooking method comprises:
- a first step (E1) of cooking for a first duration (T1), during which the relative rotation movement of the receiving means (1) and of the stirring means (2) is neutralised, the main heating means (10) is controlled to adjust the temperature according to a first setpoint value and the ventilation motor is controlled at a first ventilation system to adjust the heating flow (11) according to a first circulation speed;
- a second step (E2) of cooking for a second duration (T2) greater than the first duration (T1), during which the relative rotation movement of the receiving means (1) and of the stirring means (2) is active according to a first rotation speed, the main heating means (10) is controlled to adjust the temperature according to a second setpoint value, less than or equal to the first setpoint value, and the ventilation motor (51) is controlled at a second ventilation system, less than the first ventilation system, to adjust the heating flow (11) according to a second circulation speed.

2. Cooking method according to claim 1, **characterised in that** the cooking duration accumulated from the two cooking steps (T1, T2) corresponds to the cooking duration selected by a user.

3. Cooking method according to claim 2, **characterised in that** the duration (T1) of the first cooking step is identical, whatever the accumulated duration of the two cooking steps (T1, T2) and is between 3 and 6 minutes and is preferably equal to 4 minutes.

4. Cooking method according to any one of the preceding claims, **characterised in that** the first setpoint value of the temperature is between 120 and 140°C.

5. Cooking method according to any one of the preceding claims, **characterised in that** the second setpoint value of the temperature is between 110 and 120°C.

6. Cooking method according to any one of the preceding claims, **characterised in that** the first ventilation system is substantially equal to 100% of the nominal system of the ventilation motor (51).

7. Cooking method according to any one of the preceding claims, **characterised in that** the second ventilation system is between 50 and 90% of the nominal system of the ventilation motor (51) and is located preferably between 70 and 80% of the nominal system of the ventilation motor (51).

8. Apparatus for cooking food comprising a receiving means (1) provided for receiving food, a stirring means (2) arranged within the receiving means (1), at least one main heating means (10) and at least one ventilation motor (51) for generating a heating flow (11), the receiving means (1) and the stirring means (2) being designed to be moved with a relative rotation movement, the apparatus comprising at least one means for controlling (50) the relative rotation movement, the main heating means (10) and the ventilation motor (51), **characterised in that** the control means (50) is equipped with an electronic control unit (52) comprising a cooking programme comprising:
- a first step (E1) of cooking for a first duration (T1), during which the relative rotation movement of the receiving means (1) and of the stirring means (2) is neutralised, the main heating means (10) is controlled to adjust the temperature according to a first setpoint value and the ventilation motor (51) is controlled at a first ventilation system to adjust the heating flow (11) according to a first circulation speed;
- a second step (E2) of cooking for a second duration (T2) greater than the first duration (T1), during which the relative rotation movement of the receiving means (1) and of the stirring means (2) is active according to a first rotation speed, the main heating means (10) is controlled to adjust the temperature according to a second setpoint value, less than or equal to the first setpoint value, and the ventilation motor (51) is controlled at a second ventilation system, less than the first ventilation system, to adjust the heating flow (11) according to a second circulation speed.

9. Apparatus for cooking food according to the preceding claim, **characterised in that** the receiving means (1) comprises a plate (60) provided for receiving food and positioned above said receiving means (1) and the stirring means (2), and the plate (60) and the receiving means (1) are designed to be moved with a relative rotation movement.
